Europäisches Patentamt

(19) European Patent Office

Office européen des brevets

(11) Publication number : **0 416 893 B1**

(12) **EUROPEAN PATENT SPECIFICATION**

(45) Date of publication of patent specification :
05.01.94 Bulletin 94/01

(51) Int. Cl.⁵ : **B60C 9/20**

(21) Application number : **90309711.1**

(22) Date of filing : **05.09.90**

(54) **A pneumatic tyre.**

(30) Priority : **07.09.89 JP 231961/89
29.06.90 JP 174239/90**

(43) Date of publication of application :
**13.03.91 Bulletin 91/11**

(45) Publication of the grant of the patent :
**05.01.94 Bulletin 94/01**

(84) Designated Contracting States :
**DE FR GB**

(56) References cited :
**DE-A- 2 040 536
DE-B- 1 198 691
FR-A- 2 513 187
FR-A- 2 542 672**

(73) Proprietor : **SUMITOMO RUBBER INDUSTRIES
LIMITED
1-1 Tsutsuicho 1-chome Chuo-ku
Kobe-shi Hyogo-ken (JP)**

(72) Inventor : **Nakasaki, Eiji
629 Kimura, Kakogawa-cho
Kakogawa-shi, Hyogo-ken (JP)**
Inventor : **Yoshida, Yujiro
16-26, Minamihana Yashiki Chome
Kananishi-shi, Hyogo-ken (JP)**

(74) Representative : **Stewart, Charles Geoffrey
SP TYRES UK LIMITED Tyre Technical
Division
Fort Dunlop, Erdington, Birmingham B24 9QT
(GB)**

## Description

The present invention relates to a pneumatic tyre which can improve the high speed durability of a low aspect tyre together with steering stability, straight running performance and resistance to abnormal wear while maintaining general excellent performance.

Improvements in the rigidity of the tread part of a pneumatic tyre have been attempted by forming a belt layer comprising belt plies outside the carcass in the tread part.

It is also known that the rigidity of the belt layer can be significantly increased by overlaying plural belt plies with the cords of each ply arranged in different directions with respect to the other plies.

On the other hand, the shape of the tread is significantly changed in the shoulder part in driving. therefore, both ends of the belt plies are extended near to the shoulder part to control such changes in shape and avoid peel-off of the belt ply ends. The rigidity of tread part can be improved by such a structure.

However, the hoop effect between the belt plies is strong because of the belt cords being crossed relative to each other. Moreover, as the plurality of belt plies are united, they become stiffened. Therefore, when the aspect ratio of the tyre is small, the tread surface (a) tends to have a reverse warp (r) as shown in Fig. 6. As a result, the high speed durability is reduced, vibrations are increased, and ride comfort is reduced.

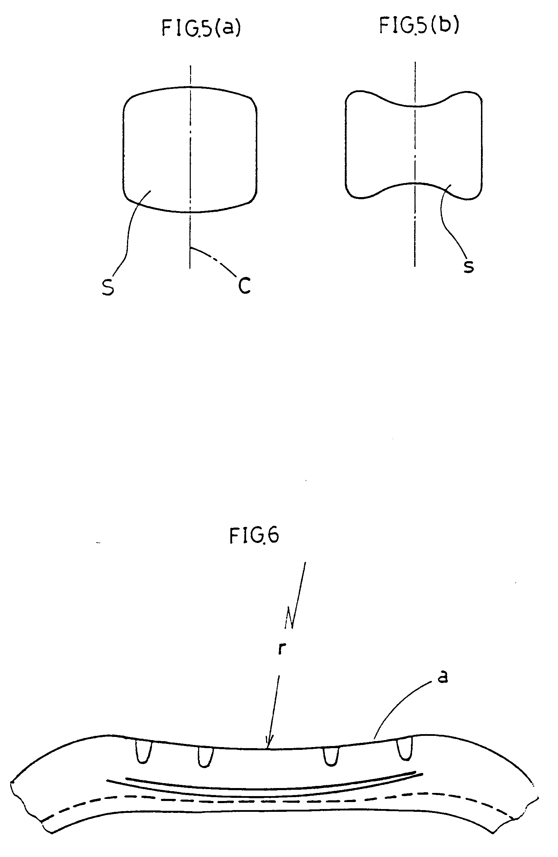

In addition in the ground contact profile (s) shown in Fig.5 (b)m the shoulder parts exhibit a higher contact pressure than the central part. As a result, abnormal wear occurs between the shoulder parts and central parts, which becomes a problem, reducing the cornering and straight running performance and the durability of the tyre.

A tyre having an aspect ratio of 70% or less, particularly, is superior in ground contact performance, but the aforementioned tendency is more significant. In the case where the belt plies are formed by using steel cords, because of the superior rigidity of belt plies, the reverse warp in the tread surface becomes excessive.

It has been proposed that the aforesaid reversed radius may be restrained by splitting the belt layer at the equatorial plane into two plies to reduce the hoop effect on the crown region.

For example, Japanese patent publication No. 51-47201 shows a radial tyre for heavy duty vehicles such as trucks, buses or the like, wherein the breaker is split into two plies with a gap at the tread centre so as to improve the steering performance and the wandering performance and ride over steps on the road. However, it is poor at restraining the belt edges, so that the high speed durability is decreased.

Also there is disclosed in Japanese patent publication No. 40-22521 a tyre where the lateral rigidity of the tread is varied by employing a split belt ply, whereby undulating wear, which may have a sinusoidal wave shape at the tread shoulder is prevented. However, this structure cannot improve high speed durability of the tyre.

Further, there is disclosed in Japanese patent publication No 51-31401 a tyre where the radially outermost belt ply in of the two belt plies is split in the equatorial plane with a gap of 5 to 6mm. This proposal intends to increase the critical speed.

As previously described, these proposals show a split belt. However, they are different in the object, the structure and the effect from the present invention, and these proposals do not achieve the object and the effect of the present invention.

Accordingly, it is an object of the present invention to provide a pneumatic tyre which has improved high speed durability, steering performance, straight running performance and wear resistance.

According to one aspect of the present invention, a pneumatic tyre comprises a carcass (6) expending from a tread (5) through sidewalls (4) and wrapped around a bead core (2) in each of two bead parts (3) a belt layer (7) arranged radially outside the carcass (6) a centre band (9) arranged radially outside the belt layer (7) and having a centre at the tyre's equator and two edge bands (10A, 10B) arranged on both lateral edges of said belt layer (7) in the tyre's axial direction so as to cover said lateral edges characterised in that the belt layer (7) includes at least a first belt ply (B1) and a second belt ply (b2) which are positioned in sequence from the carcass (6) one of the belt plies, the first belt ply (B1) or second belt ply (B2), is split into two belt ply pieces (BA) substantially at the tyre's equator said centre band (9) contains band cords laid approximately parallel to the equator and said edge bands (10A, 10B) contain band cords laid at an angle ranging from 0 degrees to 45 degrees with respect to the equator with the band cords in one edge band (10A, and the band cords in the other edge band (10B) are arranged in opposite directions to each other.

Preferably the centre band may have a width CW which is 0.2 times and less than 0.4 times the tread width TW inclusive.

As mentioned above, the belt layer includes one belt ply which is split into two pieces, so that the propagation of the lateral force and the longitudinal force acting on the belt cords during cornering or riding over projections on a road is diminished and thereby the handling performance is improved. Moreover, a centre band is provided on the belt so as to cover the gap and therefore, the rigidity in the radial direction of the belt layer due to the split is mitigated so as to prevent the tyre from becoming too weak during cornering. Further, two edge bands can be provided to separation at the belt edges to increase durability of the tyre by covering both belt edges by said edge bands.

Furthermore, the lateral force leaning to one direction, caused by the arrangement that the second belt ply cords adjacent to the tread surface being inclined, is mitigated. Because the centre band cords are arranged substantially parallel to the equatorial plane of the tyre and the two left and right edge bands contain cords with each band cord being laid at a reverse inclination to one another the straight running stability is improved and the steering performance is stabilised.

By the structure as previously described, the ground contact profile S as the whole is made even as shown in Fig. 5 (a).

As the result, even when running at high speed the steering stability is high and the durability is improved.

An embodiment of the present invention will now be described by way of example, referring the attached drawings, in which:-

Fig.1. is a sectional view showing an embodiment of the invention;

Fig.2 is a plan view showing the construction of the belt ply thereof:-

Fig.3. is a sectional view showing another embodiment of the invention;

Fig.4. (a) and (b) are plan views showing another embodiment of an edge band;

Fig.5 (a) and (b) are graphs showing the ground contacting profile of the tyre; and

Fig.6 is a sectional view showing a prior art tyre tread part.

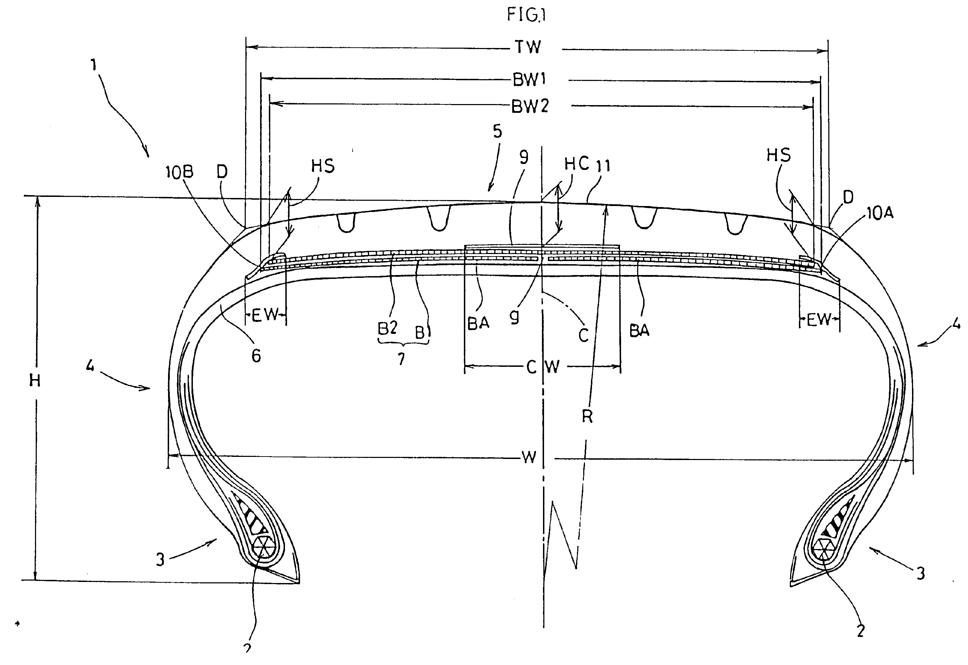

As shown in Figs 1, 2 and 3 a tyre 1 has a pair of beads 3 each containing a bead core, 2 sidewalls 4 extending outwardly from the beads 3 in the radial direction of tyre and a tread part 5 extending between the upper ends of the sidewalls. A carcass 6 extends from the tread 5 through sidewalls 4 to the beads 3 and is folded outwardly around each bead core 2. A belt layer 7 is placed outside the carcass 5 in the radial direction. Additionally a central band 9 is arranged adjacent to and radially outside the belt layer 7. Two edge bands 10A, 10B cover both lateral outer edges of the belt layer 7.

The carcass 6 is a semi-radial carcass having cords aligned at an inclination of 70 to 90 degrees to the tyre's equator C. Fibre cords such a nylon, polyester and rayon as well as steel cords may be used as the carcass cords.

The belt layer 7 of the embodiment comprises two layers, a first belt ply B1 and a second ply ply B2 placed in sequence outwardly from the carcass 6, outward in the radial direction.

The first and second belt plies B1 and B2 comprise belt cords aligned at an inclination.

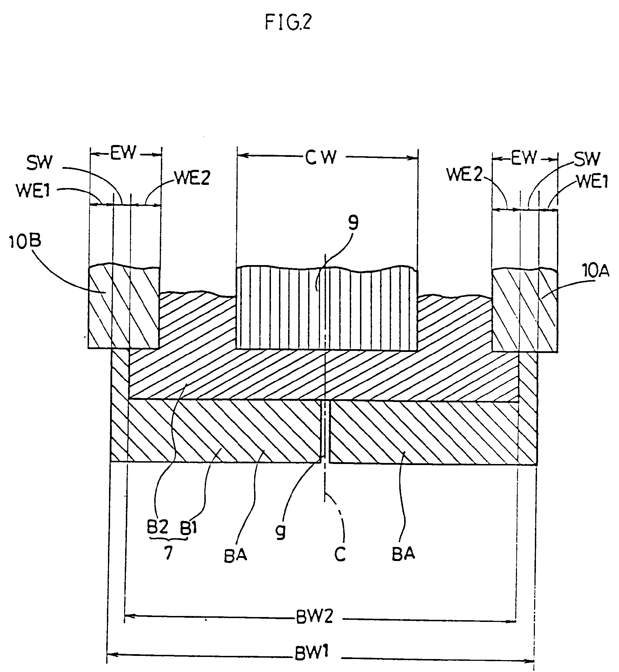

As shown in Fig.2 the cords of the first belt ply B1 of the embodiment are aligned at an inclination of 15 to 70 degrees to the tyre's equator C, upwardly to the left side. The second belt ply B2 placed at an inclination of 15 to 70 degrees in the opposite bias to the first belt ply B1, upwardly to the right side. Thus, the cords of first and second belt plies B1 and B2 are mutually crossed, to produce a high hoop effect. As a result, the rigidity of the tread part 5 in the circumferential and axial directions is improved.

The width BW1 of the first belt ply B1 in the direction of tyre's axis is more than 0.9 times the tread width TW which is the length between the outer edges D of the tread in the direction of tyre's axis, and less than 0.95 times the tread width TW. Moreover, the width BW2 of the second belt ply B2 in the direction of tyre's axis is more than 0.88 times the tread width TW and less than or equal to 0.92 times the tread width TW.

If the widths of the first and second belt plies B1 and B2 are less than the above minimum limits, the tread part lacks rigidity in the shoulder, that is near the outer edges D and D and as a result there is the tendency for the reverse warp in the middle of the tread part to be increased and thus to form a convex profile in the middle part. If the widths of the first and second belt plies B1 and B2 are made more than maximum limit, the rigidity of the tread part becomes excessive there by causing inferior steering stability.

The width of second belt ply B2 is made less than that of the first belt ply B1. Thus, an excessive sideward extension of the edge part of the second ply B2 is prevented, and separations that tend to be caused in the edges of the belt plies can be prevented.

The first belt ply B1 comprises two belt ply sections BA which are divided and separated by a gap g of 0.5mm to 4mm on the tyre's equator line C.

If the gap g is less than 0.5mm, the handling performance deteriorates. In cornering or passing over a convex object or material, a lateral force acts on the belt plies B1 and B2. However, the rubber between the narrow gap g cannot absorb the deviation of the belt parts caused by the lateral force, and thus such deterioration as caused by the lateral force is conducted through the entire belt plies. If the gap g exceeds 4mm the rigidity of belt layer 7 in the radial direction of the tyre deteriorates at the gap, and the radius of curvature of the tread surface becomes smaller. As a result, the ground contact pressure comes to be heterogeneous in the middle part and shoulder part, which deteriorates the handling performance and durability by causing abnormal wear.

For belt cords of the first and second belt plies B1 and B2, fibre cords having a relatively high elasticity such as nylon, polyester or rayon as well as Teflon, aromatic polyamide fibres and steel cords may be used

In the tread 5, the following relationship is satisfied;

$$0.95 \leqq HC/HS \leqq 1.05$$

where:-

HC is the rubber gauge thickness from the outer surface of the belt later to the outer surface 11 of the tread 5 at the equatorial plane C:

HS is the rubber gauge thickness from the outer surface of the belt layer at the belt edge to the tread surface 11.

If the ratio Hc/Hs is less than 0.95, the outer surface 11 become flat, on the other hand, if the ratio Hc/Hs is over 1.05 it becomes too round. In both cases, the ground contact pressure becomes uneven.

A centre band 9 composed of an endless spiral band ply or a cut band ply is provided. The endless spiral band ply is formed in such a way that the band cords made of organic fibres such as nylon or polyester material is continuously spirally wound around on the belt layer at a cord angle which is substantially parallel to the equator C. On the other hand, the cut band ply may be formed by sheet material which contains the band cords of organic fibres as mentioned above arranged parallel to the equator C.

Further, "substantially parallel" means that the cord angle with respect to the equator is 0 degrees or at least not more than 10 degrees. the nearer to 0 degrees the cord angle, the better the hoop effect.

The centre band 9 has its lateral width CW more than 0.2 times and less than 0.4 times the tread width TW so as to completely cover the aforesaid gap g.

If the aforesaid width CW is less than 0.2 times the tread width TW, the outer surface 11 of the tread 5 is swollen partially on the equatorial plane so that the radius of tread curvature becomes small and round. As a result, the running performance during high speed running becomes low, therefore it is necessary to set the width Cw to more than 0.2 times the tread width TW.

On the contrary, if the width CW is more than 0.4 times the tread width, it is not only expected to further improve the straight running performance and the cornering performance, but the tyre cost rises.

An edge band 10 comprising the same endless spiral band ply material as the aforesaid centre band 9 is provided. The edge band cords are composed of organic fibres spirally wound parallel to each other at a slant angle ranging from 0 degrees to 45 degrees with respect to the equator C1, or may comprise a cut band ply formed by a sheet material wherein the band cords composed of organic fibres are arranged parallel to each other at a slant angle ranging from 0 degrees to 45 degrees with respect to the equator C.

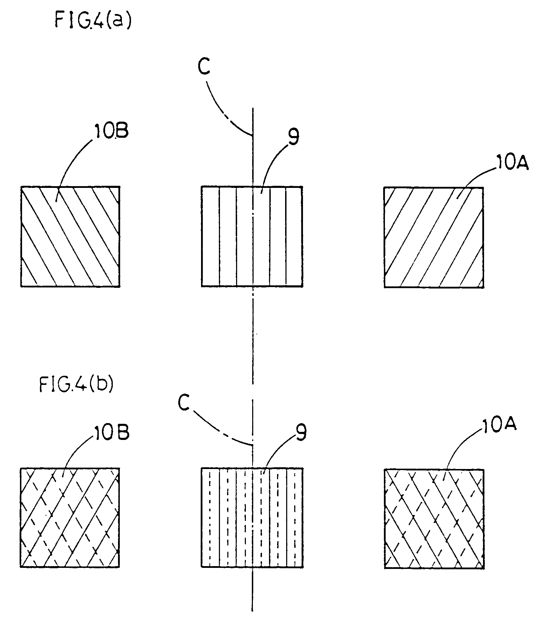

Moreover, as shown in Fig.2 the cords of one edge band 10A slant to the left, and the cords of other edge band 10B slant to the right, that is, both edge bands 10A and 10B slant inversely with respect to each other. By slanting the band cords of both edge bands inversely as previously described, the lateral forces produced from the edge bands are cancelled with each other. Therefore, the straight running stability of the tyre is improved. Further, the inclination of the band cords, as shown in Fig.4 (a) may be inverse to that as shown in Fig. 2. Furthermore, as shown in Fig.4 (b), each edge band 10A, 10B may be formed by overlapping two band plies each slanting inversely with each other. As previously described, the band cords are arranged at an angle ranging from 0 degrees to 45 degrees. But when one edge band ply is used, it is more preferable to slant the band cords at an angle of 0 degrees to 10 degrees. When two band plies are used so as to be overlapped to each other, a larger angle than 10 degrees may be employed.

The lateral width EW of the edge band 10 in the tyre's axial direction is set in order that the overlapping width WE2 with the narrow belt ply, in thus embodiment, with the second belt ply B2 is from 7 to 10mm. In addition, the overflowed width WE1 axially outwardly from the widest belt ply, in this embodiment, from the first belt ply B1 is from 5 to 10mm. Thus the respective edge bands 10 cover each axially outer edge of the belt layer 7.

Further, in the present embodiment, the outer surface 11 of the tread 5 is profiled with a radius of curvature R ranging from 450mm to 550mm for a tyre of size 225/50R12/5 when the said tyre is mounted on its normal rim and inflated to its normal internal pressure.

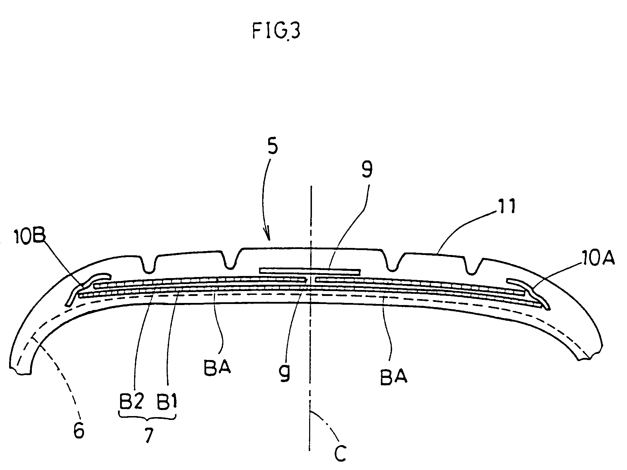

Fig.3. shows another embodiment according to the present invention wherein the belt layer 7 comprises a second belt ply B2 split at the equatorial plane C into two pieces BA and a first belt ply B1 of one belt ply.

Prototypes of the above tyres having dimensions of 225/50R12.5 were produced according to the specifications shown in Table 1 to have the structure shown in Fig.1 or 3 and were tested.

A belt cord having the following specification was used both in the embodiments and the conventional comparison tyre.

Material of cord:        steel

Thickness of cord:       3/0.175 + 6/0.32

The results of the tests are shown in Table 2.

The tests were performed to the following specifications.

1) High speed durability test

The test was performed by mounting on a rotating drum tester of 1.6m in diameter and having a smooth surface, applying the maximum load and maximum internal pressure specified by the JIS standard and the driving distance to breakage was obtained starting from a speed of 160 km/h and increasing speed by 10 km/h intervals every 2 hours of drive, which was shown by an index setting the value of a conventional tyre 1 at 100 points. Higher scores show more superior performance, and 130 points and higher scores were approved test.

2) Ride comfort vibration test

The test was performed by forming an iron convex hump of 25mm in height in one part on a drum surface of 1.6m in diameter, applying the maximum load and maximum internal pressure specified in the JIS to the prototype tyres, and measuring the load varying forces in the horizontal and vertical directions with respect to the fixing shaft to which the tyre is mounted when the tyre passed over the hump. The results are shown by setting the conventional tyre at 100 points. Higher score of index shows smaller reaction, showing superiority in ride comfort. Scores of 101 points and higher were approved.

A speed of 60 to 120 km/h was employed for a high speed test and a speed of 20 to 50 km/h for low speed test in the table.

3) Field wear resistance test

The tyres were mounted on an actual automobile, driven for 40,000 km on freeways and general paved road at a ratio of 1:1 and driving the required distance until the tread part was worn to 1mm. These distances were shown by indices setting the conventional tyre at 100 points. Higher scores shown better performance, and scores of 100 and higher were approved.

4) Field deviational wear test

The wear rate of the shoulder parts of the tyres which were tested in test 3) was shown by indices setting the wear rate of the crown rub part at 100 points. Scores nearer to 100 points show that the wear rates are more equivalent. Points of 100 + 2 were approved.

5) Straight running performance and steering performance.

Those performance were evaluated, when the running test according to 3) was performed, by the feeling of a skilled test driver. The results are expressed as indices with the value for the comparative example as 100. The higher the index is better. The straight running performance is acceptable when the index number thereof is more than 105, and the steering performance is acceptable when index number thereof is more than 100.

As previously described, in the pneumatic tyre according to the present invention, the ground contacting pressure is distributed evenly over the tread between the centre part and the shoulder part, even when the aspect ratio of the tyre is low. Therefore, wear resistance and resistance to abnormal wear are improved. Further, the straight running stability, the cornering performance and high speed durability are improved by providing the centre band and edge bands.

Furthermore, due to the aforesaid structure, a tyre is possible with thinner rubber gauges to provide a tyre lighter in weight, thereby the high speed performance is further improved.

T a b l e  1 (a)

| | | Example 1 | Example 2 | Example 3 | Example 4 | Example 5 | Example 6 | |
|---|---|---|---|---|---|---|---|---|
| Tyre aspect ratio (%) (Tyre height(H) / tyre width(W) | | 5 0 | 5 0 | 5 0 | 5 0 | 5 0 | 5 0 | |
| Tread width (TW)mm | | 1 8 6 | 1 8 6 | 1 8 6 | 1 8 6 | 1 8 6 | 1 8 6 | |
| Tread gauge | crown part (mm) | 1 0.0 | 1 0.5 | 9.5 | 1 0.0 | 1 0.0 | 1 0.0 | |
| | shoulder part(mm) | 1 0.0 | 1 0.0 | 1 0.0 | 1 0.0 | 1 0.0 | 1 0.0 | |
| belt composition | | Fig.1 | Fig.1 | Fig.1 | Fig.3 | Fig.1 | Fig.1 | |
| First belt width (BW1) (mm) | | 1 7 6 | 1 7 6 | 1 7 6 | 1 7 6 | 1 7 6 | 1 7 6 | |
| Second belt width (BW2) (mm) | | 1 7 0 | 1 7 0 | 1 7 0 | 1 7 0 | 1 7 0 | 1 7 0 | |
| Center band width (CW) (mm) CW/TW | | 7 3 0.4 | 3 7 0.2 | 5 0 0.2 8 | 5 0 0.2 8 | 3 7 0.2 8 | 7 3 0.4 | |
| Edge band width (EW) (mm) SW mm WE1 mm WE2 mm | | 2 7 7 1 0 1 0 | 2 1 7 7 7 | 2 7 7 1 0 1 0 | 2 1 7 7 7 | 2 4 7 1 0 1 0 | 2 1 7 7 7 | |
| Inclination of band cords Center band cord angle composition of center band edge band cord angle * composition of edge band | | Fig. 2 0° spiral —0° +0° spiral | Fig. 4(a) 0° spiral +0° —0° spiral | Fig. 4(b) 0° spiral +5° —5° cut | Fig. 4(b) 0° spiral —4 5° +4 5° cut | Fig. 2 0° spiral —0° +0° spiral | Fig. 4(a) 0° spiral —0° +0° spiral | |

* (+) ···clockwise
  (—) ···unclockwise

Table 1 (b)

| Example 7 | Example 8 | Example 9 | Example 10 | Example 11 | Example 12 | Comparison 1 | Comparison 2 | Comparison 3 |
|---|---|---|---|---|---|---|---|---|
| 5 0 | 5 0 | 5 0 | 5 0 | 5 0 | 5 0 | 5 0 | 5 0 | 5 0 |
| 1 7 6 | 1 7 6 | 1 7 6 | 1 7 6 | 1 7 6 | 1 7 6 | 1 7 6 | 1 7 6 | 1 7 6 |
| 10.0 | 10.0 | 10.0 | 10.0 | 9.4 | 10.6 | 14.5 | 10.0 | 10.0 |
| 10.0 | 10.0 | 10.0 | 10.0 | 10.0 | 10.0 | 10.0 | 10.0 | 10.0 |
| Fig.1 | Fig.1 | Fig.1 | Fig.1 | Fig.1 | Fig.1 | not split | Fig.1 | Fig.3 |
| 1 7 6 | 1 7 6 | 1 7 6 | 1 7 6 | 1 2 4 | 1 7 6 | 1 7 6 | 1 7 6 | 1 7 6 |
| 1 7 0 | 1 7 0 | 1 7 0 | 1 7 0 | 1 7 0 | 1 7 0 | 1 7 0 | 1 7 0 | 1 7 0 |
| 7 5 / 0.4 1 | 3 5 / 0.1 9 | 4 0 / 0.2 2 | 4 0 / 0.2 2 | 3 7 / 0.2 8 | 3 7 / 0.2 8 | —— | —— | 3 7 / 0.2 8 |
| 2 7 / 7 / 1 0 / 1 0 | 2 1 / 7 / 7 / 7 | 1 9 / 7 / 6 / 6 | 2 9 / 7 / 1 1 / 1 1 | 2 7 / 7 / 1 0 / 1 0 | 2 7 / 7 / 1 0 / 1 0 | —— | —— | 2 4 / 7 / 7 / 1 0 |
| Fig.4 (a) 0° spiral +0° −0° spiral | Fig.2 0° spiral −0° +0° spiral | Fig.2 0° spiral −0° +0° spiral | Fig.2 0° spiral −0° +0° spiral | Fig.2 0° spiral +0° −0° spiral | Fig.2 0° spiral +0° −0° spiral | —— | —— | 0° spiral −1 5° −1 5° spiral |

EP 0 416 893 B1

EP 0 416 893 B1

## Table 2(a)

| | | Example 1 | Example 2 | Example 3 | Example 4 | Example 5 | Example 6 | |
|---|---|---|---|---|---|---|---|---|
| ground contact profile | | Fig.5(a) | Fig.5(a) | Fig.5(a) | Fig.5(a) | Fig.5(a) | Fig.5(a) | |
| radius of tread curvature (mm) | | 5 0 0 | 4 5 0 | 5 5 0 | 5 0 0 | 5 5 0 | 5 0 0 | |
| High speed durability (index) | | 1 4 0 | 1 5 0 | 1 3 0 | 1 3 0 | 1 4 0 | 1 3 0 | |
| Reaction in vertical direction when riding over convex (index) | High speed | 1 0 2 | 1 0 2 | 1 0 1 | 1 0 2 | 1 0 2 | 1 0 2 | |
| | Low speed | 1 0 2 | 1 0 2 | 1 0 1 | 1 0 2 | 1 0 1 | 1 0 2 | |
| Reaction in longitudina -l direction when riding over convex (index) | High speed | 1 0 2 | 1 0 2 | 1 0 1 | 1 0 2 | 1 0 1 | 1 0 2 | |
| | Low speed | 1 0 5 | 1 0 5 | 1 0 2 | 1 0 4 | 1 0 5 | 1 0 4 | |
| Cornering power (Kg/deg) (index) | | 1 0 5 | 1 0 0 | 1 0 5 | 1 0 5 | 1 0 0 | 1 0 5 | |
| Field wear resistance (index) | | 1 0 0 | 1 0 0 | 1 0 0 | 1 0 0 | 1 0 0 | 1 0 0 | |
| Field abnormal wear resistance (index) | | 1 0 0 | 1 0 0 | 1 0 0 | 1 0 0 | 1 0 0 | 1 0 0 | |
| straight running performance | | 1 1 0 | 1 1 0 | 1 1 0 | 1 1 0 | 1 1 0 | 1 1 0 | |
| steering performance | | 1 0 0 | 1 0 0 | 1 0 0 | 1 0 0 | 1 0 0 | 1 0 0 | |

8

T a b l e 2 (b)

| | Example 7 | Example 8 | Example 9 | Example 10 | Example 11 | Example 12 | Comparison 1 | Comparison 2 | Comparison 3 |
|---|---|---|---|---|---|---|---|---|---|
| | Fig. 5 (a) | Fig. 5 (a) | Fig. 5 (a) | Fig. 5 (a) | Fig. 5 (a) | Fig. 5 (a) | Fig. 5 (b) | Fig. 5 (a) | Fig. 5 (a) |
| | 550 | 550 | 500 | 500 | 600 | 420 | 1500 | 500 | 550 |
| | 135 | 120 | 110 | 130 | 120 | 160 | 100 | 115 | 140 |
| | 100 | 101 | 101 | 101 | 100 | 102 | 100 | 102 | 102 |
| | 100 | 101 | 102 | 102 | 100 | 102 | 100 | 102 | 102 |
| | 100 | 101 | 102 | 102 | 100 | 102 | 100 | 102 | 105 |
| | 100 | 102 | 102 | 102 | 100 | 104 | 100 | 102 | 100 |
| | 100 | 102 | 98 | 105 | 105 | 105 | 100 | 95 | 100 |
| | 100 | 98 | 100 | 100 | 100 | 95 | 100 | 100 | 100 |
| | 100 | 100 | 145 | 110 | 110 | 105 | 100 | 90 | 100 |
| | 110 | 110 | 110 | 110 | 110 | 110 | 100 | 100 | 100 |
| | 100 | 100 | 100 | 100 | 100 | 100 | 100 | 100 | 100 |

## Claims

1. A pneumatic tyre comprising a carcass (6) extending from a tread (5) through sidewalls (4) and wrapped

9

around a bead core (2) in each of two bead parts (3), a belt layer (7) arranged radially outside the carcass (6), a centre band (9) arranged radially outside the belt layer (7) and having a centre at the tyre's equator, and two edge bands (10A, 10B) arranged on both lateral edges of said belt layer (7) in the tyre's axial direction so as to cover said lateral edges, characterised in that the belt layer (7) includes at least a first belt ply (B1) and a second belt ply (B2) which are positioned in sequence from the carcass (6), one of the belt plies, either the first belt ply (B1) or second belt ply (B2) being split into two belt pieces (BA) substantially at the tyre's equator; in that said centre band (9) contains band cords laid approximately parallel to the equator and; in that said edge bands (10A, 10B) contain band cords laid at an angle ranging from 0 degrees to 45 degrees with respect to the equator, with the band cords in one edge band (10A) and the band cords in the other edge band (10B) being arranged in opposite directions to each other.

2. A pneumatic tyre as set forth in claim 1 characterised in that said centre band (9) has a width (CW) in the tyre's axial direction of 0.2 times to 0.4 times the tread width (TW) inclusive.

## Patentansprüche

1. Ein Luftreifen mit einer Karkasse (6), die sich aus einer Lauffläche (5) durch Seitenwände (4) erstreckt und um einen Wulstkern (2) in jedem der zwei Wulstteile (3) wikkelt, einer Gürtelschicht (7), die radial außerhalb der Karkasse (6) angeordnet ist, einem Mittelband (9), das radial außerhalb der Gürtelschicht (7) angeordnet ist und einen Mittelpunkt an dem Äquator des Reifens hat, und zwei Randbändern (10A, 10B), die auf beiden lateralen Rändern der Gürtelschicht (7) in der axialen Richtung des Reifens angeordnet sind, um so die lateralen Ränder abzudecken, dadurch gekennzeichnet, daß die Gürtelschicht (7) zumindest eine erste Gürtellage (B1) und eine zweite Gürtellage (B2) umfaßt, welche in Folge aus der Karkasse (6) positioniert sind, wobei eine der Gürtellagen, entweder die erste Gürtellage (B1) oder die zweite Gürtellage (B2), in zwei Gürtelstücke (BA) im wesentlichen am Äquator des Reifens aufgetrennt sind; daß das Mittelband (9) Bandkorde enthält, die näherungsweise parallel zu dem Äquator gelegt sind und; daß Randbänder (10A, 10B) Bandkorde enthalten, die in einem Winkel gelegt sind, der von 0 Grad bis 45 Grad mit Bezug auf den Äquator reicht, wobei die Bandkorde in einem Randband (10A) und die Bandkorde in dem anderen Randband (10B) in entgegengesetzten Richtungen zueinander angeordnet sind.

2. Ein Luftreifen nach Anspruch 1, dadurch gekennzeichnet, daß das Mittelband (9) eine Breite (CW) in der axialen Richtung des Reifens von 0,2 mal bis 0,4 mal der Reifenbreite (TW) einschließlich hat.

## Revendications

1. Pneumatique comprenant une carcasse (6) disposée d'une bande de roulement (5) à des flancs (4) et enroulée autour d'une tringle (2) de chacune de deux parties de talon (3), une couche de ceinture (7) placée radialement à l'extérieur de la carcasse (6), une bande centrale (9) placée radialement à l'extérieur de la bande de ceinture (7) et ayant son centre sur l'équateur du pneumatique, et deux bandes latérales (10A, 10B) placées aux deux bords latéraux de la couche de ceinture (7) dans la direction axiale du pneumatique afin qu'elles recouvrent les bords latéraux, caractérisé en ce que la couche de ceinture (7) comporte au moins une première nappe de ceinture (B1) et une seconde nappe de ceinture (B2) qui sont placées successivement depuis la carcasse (6), l'une des nappes de ceinture, la première (B1) ou la seconde (B2), étant divisée en deux parties (BA) pratiquement sur l'équateur du pneumatique, en ce que la bande centrale (9) a des câblés de bande sensiblement parallèles à l'équateur, et en ce que les bandes latérales (10A, 10B) contiennent des câblés faisant un angle compris entre 0 et 45° avec l'équateur, les câblés d'une bande latérale (10A) et les câblés de l'autre bande latérale (10B) étant disposés en sens opposés.

2. Pneumatique selon la revendication 1, caractérisé en ce que la bande centrale (9) a une largeur (CW) dans la direction axiale du pneumatique qui est comprise entre 0,2 et 0,4 fois incluse la largeur de la bande de roulement (TW).

FIG.1

FIG.2

## FIG.3

FIG.4(a)

FIG.4(b)

FIG.5(a)  FIG.5(b)

FIG.6